# FASCICULE DE BREVET EUROPEEN

(11) **EP 2 245 289 B1**
(45) Date de publication et mention de la délivrance du brevet: **05.12.2012**
(21) Numéro de dépôt: 09725361.1
(22) Date de dépôt: 26.02.2009
(51) Int. Cl.: F02K 1/38, F02K 1/46

(54) **BORD DE FUITE POUR MOTEUR D'AÉRONEF, DU TYPE À CHEVRONS MOBILES**
AUSTRITTSKANTE FÜR EIN FLUGZEUGTRIEBWERK MIT BEWEGLICHEN CHEVRON-DÜSEN
TRAILING EDGE FOR AN AIRCRAFT ENGINE, OF THE TYPE WITH MOVING CHEVRONS

(30) Priorité: 29.02.2008 FR 0801127
(43) Date de publication de la demande: 03.11.2010
(73) Titulaire: Aircelle, 76700 Gonfreville L'Orcher (FR)
(72) Inventeur: GUERIN, Philipe, F-76610 Le Havre (FR)
(74) Mandataire: Gaillarde, Frédéric F. Ch.
(86) Numéro de dépôt international: PCT/FR2009/000211
(87) Numéro de publication internationale: WO 2009/118472

(56) Documents cités:
- EP-A- 0 913 567
- FR-A- 1 164 936
- FR-A- 1 255 674
- FR-A- 1 542 668
- FR-A- 2 602 550
- US-A- 3 174 282
- US-A- 4 279 382
- US-A1- 2002 125 340
- US-A1- 2004 031 258

## Description

La présente invention se rapporte à un bord de fuite pour moteur d'aéronef, du type à chevrons mobiles. La présente invention se rapporte également à une nacelle incorporant un tel bord de fuite.

On connaît de la technique antérieure un dispositif de réduction de bruit pour moteur d'aéronef du type à chevrons mobiles : ces chevrons peuvent être placés sur le bord de fuite de la tuyère d'éjection des gaz chauds d'un turboréacteur, et/ou sur le bord de fuite du capot extérieur du turboréacteur.

Ces chevrons sont mobiles entre une position passive de croisière, dans laquelle ils s'étendent dans le prolongement des parois sur lesquelles ils sont montés, et n'interfèrent donc pratiquement pas avec les flux d'air en jeu, et une position active utilisée lors du décollage ou de l'atterrissage, dans laquelle ces chevrons sont inclinés par rapport aux parois sur lesquelles ils sont montés, permettant ainsi le mélange de l'air chaud sortant de la tuyère d'éjection des gaz avec l'air froid provenant du flux secondaire, et/ou le mélange de cet air froid avec l'air extérieur.

Grâce à cet effet de mélange, on réussit à limiter l'effet de déchirement mutuel des différents flux d'air, et par là même à réduire le niveau acoustique émis en aval du turboréacteur. De tels dispositifs sont par exemple décrits dans les documents US 2002/0125340 et FR 1164936.

Un inconvénient de ces chevrons mobiles de la technique antérieure est qu'il faut fournir une énergie considérable pour les faire passer de leur position passive à leur position active, ce qui nécessite l'utilisation de moyens d'actionnement relativement importants.

La présente invention a ainsi notamment pour but de fournir un bord de fuite du type à chevrons mobiles qui ne présente pas ces inconvénients.

On atteint ce but de l'invention avec un bord de fuite selon la revendication 1, tel qu'un bord de fuite d'éjection des gaz chauds ou d'inverseur de poussée de nacelle d'aéronef incorporant un dispositif de réduction du bruit pour moteur d'aéronef du type à chevrons mobiles disposés dans le prolongement du bord de fuite, ce bord de fuite comprenant des moyens d'actionnement aptes à faire passer ces chevrons d'une position passive dans laquelle ils sont orientés sensiblement selon la direction du flux d'air sortant dudit moteur, à une position active dans laquelle au moins une partie de chaque chevron est inclinée par rapport à cette direction, ce bord de fuite étant remarquable en ce que ladite position active se déduit de ladite position passive par pivotement, éventuellement combiné à une translation, d'au moins une partie de chaque chevron autour d'un axe sensiblement parallèle à ladite direction.

Grâce à ces caractéristiques, la mise en action des chevrons en vue d'obtenir une réduction de bruit s'effectue donc par mise en rotation d'au moins une partie de chaque chevron autour d'une direction parallèle au flux d'air sortant du turboréacteur : lors de ce mouvement, les chevrons ne présentent qu'une faible prise à l'air sortant du turboréacteur (et circulant à l'extérieur de celui-ci), de sorte qu'une quantité d'énergie relativement peu importante suffit à faire passer ces chevrons de leur position passive à leur position active.

Ainsi, des moyens d'actionnement relativement légers suffisent pour réaliser cette modification de position.

Suivant d'autres caractéristiques optionnelles du bord de fuite selon l'invention :
- ladite position active se déduit de ladite position passive par un pivotement d'ensemble de chaque chevron autour dudit axe ;
- ladite position active se déduit de ladite position passive par la déformation par torsion d'une partie de chaque chevron autour dudit axe ;
- chaque chevron comprend une partie fixe et une position mobile montée pivotante, par des moyens d'articulation appropriés, sur cette partie fixe ;
- chaque chevron présente une forme vrillée d'origine ;
- lesdits moyens d'actionnement sont aptes à permettre la vibration d'au moins une partie de chaque chevron autour de sa position active : cette mise en vibration, pouvant être réalisée avec peu d'énergie compte tenu de l'orientation des chevrons selon la direction des flux d'air, permet d'augmenter le mélange de ces flux, et ainsi de réduire encore plus le bruit ;
- lesdits moyens d'actionnement comprennent des moyens de rappel élastique de chaque chevron vers sa position passive : ces moyens de rappel élastique permettent de s'affranchir de tout moyen d'actionnement actif pour ramener les chevrons dans leur position active, ce qui constitue une sécurité vis-à-vis des risques de défaillance de tels moyens d'actionnement ;
- au moins une partie de chaque chevron est montée sur une tige munie d'une rainure hélicoïdale coopérant avec un doigt fixe: cet agencement permet de réaliser de manière simple le mouvement de rotation des chevrons entre leur position active et leur position passive : il suffit en effet de prévoir un actionneur linéaire apte à pousser la tige de chaque chevron pour en provoquer la rotation ;
- ledit bord de fuite comprend des chevrons de différentes tailles : ceci permet d'adapter au mieux le bord de fuite à une nacelle donnée, et ainsi d'optimiser la réduction du bruit ;
- les positions actives de certains desdits chevrons sont obtenues par pivotement en sens inverse par rapport aux positions actives d'autres chevrons : cette possibilité de pivotement en sens inverse offre une efficacité acoustique accrue ;
- lesdits chevrons sont montés en saillie ;
- lesdits chevrons sont montés en incrustation ;
- lesdits chevrons ne sont répartis que sur une portion de la circonférence dudit bord de fuite.

La présente invention se rapporte également à une nacelle pour moteur d'aéronef, remarquable en ce qu'elle comprend au moins un bord de fuite conforme à ce qui précède.

Suivant d'autres caractéristiques optionnelles de cette nacelle :
- lesdits chevrons sont disposés sur le bord de fuite de la tuyère d'éjection des gaz de cette nacelle ;
- lesdits chevrons sont disposés sur le bord de fuite de l'inverseur de poussée de cette nacelle.

D'autres caractéristiques et avantages de la présente invention apparaîtront à la lumière de la description qui va suivre et à l'examen des figures ci-annexées dans lesquelles :
- la figure 1 est une vue en perspective d'une partie arrière de la nacelle pour turboréacteur d'aéronef destinée à être équipée d'un bord de fuite selon l'invention,
- la figure 2 est une vue en perspective de trois chevrons selon l'invention en position passive,
- la figure 3 est une vue analogue à celle de la figure 2, les trois chevrons étant représentés en position active,
- la figure 4 représente en position passive deux chevrons réalisés selon une variante de l'invention,
- la figure 5 représente en perspective un chevron réalisé selon encore une autre variante de l'invention, et
- la figure 6 représente une vue de côté d'un chevron selon l'invention et de son mécanisme d'actionnement.

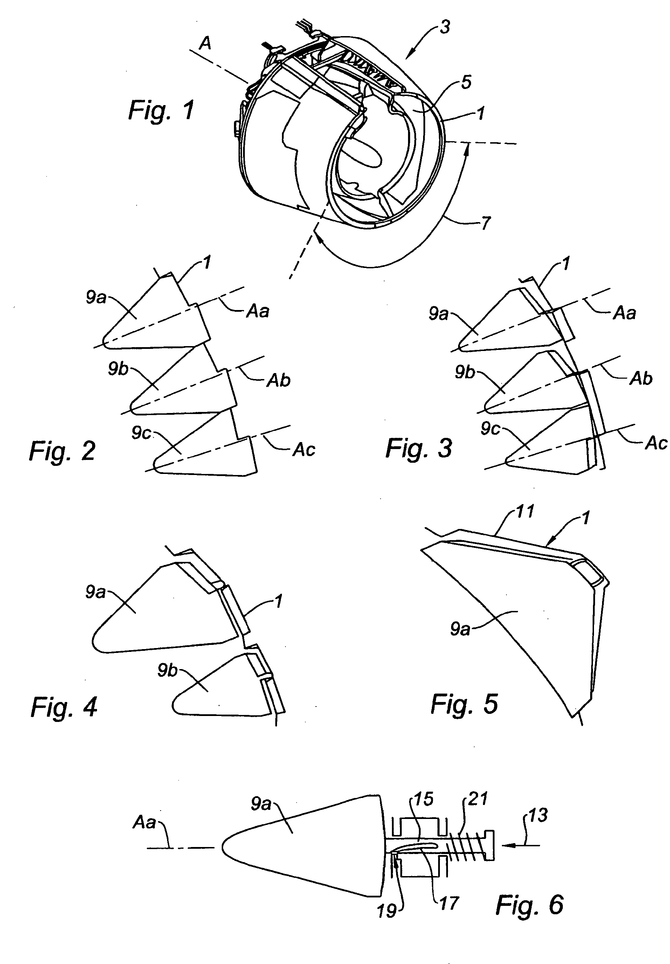

En se reportant à la figure 1, on peut voir que le bord de fuite selon l'invention peut être disposé par exemple sur le bord arrière 1 d'un inverseur de poussée 3 de nacelle d'aéronef.

Ce bord arrière 1 est situé à la limite entre le flux d'air extérieur circulant le long de la nacelle, et le flux d'air froid engendré par la soufflante du turboréacteur, et circulant dans une veine d'air froid 5.

Les chevrons formant le bord de fuite selon l'invention peuvent être disposés sur toute la circonférence du bord arrière 1, ou uniquement sur une partie de cette circonférence, comme cela est symbolisé par la flèche 7 de la figure 1.

En se reportant aux figures 2 et 3, on peut voir que le bord de fuite selon l'invention comprend donc une pluralité de chevrons 9a, 9b, 9c, c'est-à-dire de plaques de forme sensiblement triangulaire, les pointes aigues de ces triangles étant dirigées vers l'arrière de la nacelle.

Selon une caractéristique de l'invention, les chevrons 9a, 9b, 9c sont montés sur le bord de fuite 1 en étant aptes à pivoter autour d'axes respectifs Aa, Ab et Ac sensiblement parallèles aux flux d'air à l'intérieur de la nacelle 3.

En d'autres termes, ces axes Aa, Ab et Ac sont chacun sensiblement parallèles à l'axe A de la nacelle 3, visible sur la figure 1.

En position normale de croisière, les chevrons 9a, 9b, 9c sont disposés comme représenté à la figure 2, c'est-à-dire qu'ils sont disposés dans le prolongement du bord de fuite 1 de la nacelle, de manière à présenter une prise minimale aux flux d'air circulant dans la veine d'air froid 5 ainsi qu'à l'extérieur de cette nacelle.

En situation de décollage ou d'atterrissage, où il importe de réduire les émissions acoustiques de la nacelle, chaque chevron 9a, 9b, 9c est pivoté autour de son axe respectif Aa, Ab et Ac, comme cela est indiqué sur la figure 3, de manière à entraver les flux d'air circulant d'une part à l'intérieur de la veine d'air froid 5 et d'autre part à l'extérieur de la nacelle.

Comme cela est représenté sur la figure 3, les deux chevrons, 9a, 9b peuvent pivoter dans un premier sens, et le troisième chevron 9c peut pivoter dans un deuxième sens opposé au premier.

On peut également prévoir, comme cela est représenté à la figure 4, que tous les chevrons ne présentent pas la même taille, en fonction des besoins d'optimisation acoustiques.

On peut également prévoir, comme cela est représenté à la figure 5, que les chevrons, au lieu de faire saillie en aval du bord arrière 1 de la nacelle, soient en fait chacun disposé dans un logement 11 de forme complémentaire, formé à l'intérieur du bord de fuite 1.

En se reportant à la figure 6, on peut voir plus précisément un mode de réalisation possible des moyens d'actionnement des chevrons 9, permettant de les faire passer de leur position passive à leur position active, et inversement.

Comme cela est visible sur cette figure 6, on peut avoir un actionneur linéaire, électrique, électromagnétique ou hydraulique, apte à exercer un effort de poussée selon la direction Aa du chevron 9a, comme cela est indiqué par la flèche 13.

Le chevron 9a est monté sur une tige 15 comportant une rainure hélicoïdale 17 susceptible de coopérer avec un doigt fixe 19.

Ainsi, sous l'effet de la poussée 13, la rainure hélicoïdale 17 défile sur le doigt 19, provoquant la rotation du chevron 9a en même temps que son mouvement vers l'arrière de la nacelle.

Des moyens élastiques tels qu'un ressort 21 sont prévus de manière que lorsque l'effort de poussée 13 cesse, le chevron 9a revienne vers sa position passive, après avoir pivoté en sens inverse.

On notera que l'on peut avantageusement prévoir que les moyens d'actionnement permettant d'exercer la poussée 13 soient doués d'une capacité de vibration, permettant ainsi de faire vibrer les chevrons autour de leur position active.

Le mode de fonctionnement et les avantages du bord de fuite qui vient d'être décrit résultent directement de ce qui précède.

En phase d'atterrissage ou de décollage, c'est-à-dire lorsqu'il importe de réduire considérablement le bruit émis par le turboréacteur d'un aéronef, on fait passer les chevrons de leur position passive représentée à la figure 2 à leur position active représentée à la figure 3, dans laquelle ces chevrons interfèrent avec les flux d'air circulant de part et d'autre de la paroi sur le bord de fuite 1 de laquelle ils sont montés.

Cette interférence avec ces flux d'air permet de favoriser le mélange de ces deux flux d'air, et ainsi de limiter les effets de déchirement mutuel de ces flux d'air, générateurs de très fortes ondes acoustiques.

Tant dans leur position passive que dans leur position active, les chevrons s'étendent selon la direction des flux d'air, de sorte qu'il suffit de peu d'énergie pour les faire passer de l'une à l'autre de ces positions : on peut donc utiliser des moyens d'actionnement faiblement dimensionnés, tels que des actionneurs électriques disponibles sur le marché.

On peut de la sorte limiter le problème de poids inhérent à l'utilisation de ces actionneurs.

La présence des moyens de rappel élastique 21 permet le retour des chevrons à leur position passive y compris lorsque les moyens d'actionnement sont défaillants, ce qui constitue un élément de sécurité.

Bien entendu, la présente invention n'est nullement limitée au mode de réalisation décrit et représenté, fourni à titre de simple exemple : le nombre des chevrons, leur répartition circonférentielle, leur sens de rotation, leur taille respective, ainsi que leur lieu d'implantation (sur le bord arrière d'un inverseur de poussée ou sur le bord arrière d'une tuyère d'éjection de gaz chauds) peuvent en effet varier considérablement tout en restant dans le cadre de la présente invention.

C'est ainsi également que l'on pourrait envisager une variante dans laquelle chaque chevron comprendrait une partie montée de manière fixe sur le bord de fuite 1, et une partie mobile montée pivotante, par des moyens d'articulation appropriés, sur cette partie fixe.

C'est ainsi encore que l'on pourrait envisager que chaque chevron soit formé dans un matériau déformable, le passage de la position passive à la position active s'effectuant alors par déformation par torsion du chevron par des moyens d'actionnement approprié.

C'est ainsi encore que l'on pourrait envisager que chaque chevron présente une forme légèrement vrillée d'origine, de manière à accentuer la pénétration du chevron dans les flux d'air concernés lors de sa mise en rotation.

C'est ainsi encore que l'on pourrait étendre les enseignements de la présente invention à d'autres bords de fuites que ceux d'une nacelle de turboréacteur, tels que ceux des ailes ou de l'empennage d'un aéronef.

## Revendications

1. Bord de fuite (1), tel qu'un bord de fuite de tuyère d'éjection des gaz chauds ou d'inverseur de poussée de nacelle d'aéronef, incorporant un dispositif de réduction du bruit pour moteur d'aéronef du type à chevrons mobiles (9a, 9b, 9c) disposés dans le prolongement du bord de fuite, comprenant des moyens d'actionnement (13, 15, 17, 19, 21) aptes à faire passer ces chevrons (9a, 9b, 9c) d'une position passive dans laquelle ils sont orientés sensiblement selon la direction du flux d'air sortant dudit moteur, à une position active dans laquelle au moins une partie de chaque chevron est inclinée par rapport à cette direction, ce bord de fuite (1) étant **caractérisé en ce que** ladite position active se déduit de ladite position passive par pivotement, éventuellement combiné à une translation, d'au moins une partie de chaque chevron autour d'un axe (Aa, Ab, Ac) sensiblement parallèle à ladite direction.

2. Bord de fuite (1) selon la revendication 1, **caractérisé en ce que** ladite position active se déduit de ladite position passive par un pivotement d'ensemble de chaque chevron autour dudit axe (Aa, Ab, Ac).

3. Bord de fuite (1) selon la revendication 1, **caractérisé en ce que** ladite position active se déduit de ladite position passive par la déformation par torsion d'une partie de chaque chevron autour dudit axe.

4. Bord de fuite (1) selon la revendication 1, **caractérisé en ce que** chaque chevron comprend une partie fixe et une position mobile montée pivotante, par des moyens d'articulation appropriés, sur cette partie fixe.

5. Bord de fuite (1) selon l'une quelconque des revendications précédentes, **caractérisé en ce que** chaque chevron présente une forme vrillée d'origine.

6. Bord de fuite (1) selon l'une quelconque des revendications précédentes, **caractérisé en ce que** lesdits moyens d'actionnement (13, 15, 17, 19, 21) sont aptes à permettre la vibration d'au moins une partie de chaque chevron (9a, 9b, 9c) autour de sa position active.

7. Bord de fuite (1) selon l'une quelconque des revendications précédentes, **caractérisé en ce que** lesdits moyens d'actionnement comprennent des moyens de rappel élastique (21) de chaque chevron (9a, 9b, 9c) vers sa position passive.

8. Bord de fuite (1) selon l'une quelconque des revendications
précédentes, **caractérisé en ce qu'**au moins une partie de chaque chevron (9a, 9b, 9c) est montée sur une tige (15) munie d'une rainure hélicoïdale (17) coopérant avec un doigt fixe (19).

9. Bord de fuite (1) selon l'une quelconque des revendications précédentes, **caractérisé en ce qu'**il comprend des chevrons de différentes tailles (9a, 9b).

10. Bord de fuite (1) selon l'une quelconque des revendications précédentes, **caractérisé en ce que** les positions actives de certains desdits chevrons (9a, 9b) sont obtenues par pivotement en sens inverse par rapport aux positions actives d'autres chevrons (9c).

11. Bord de fuite (1) selon l'une quelconque des revendications précédentes, **caractérisé en ce que** lesdits chevrons (9a, 9b, 9c) sont montés en saillie.

12. Bord de fuite (1) selon l'une quelconque des revendications précédentes, **caractérisé en ce que** lesdits chevrons (9a) sont montés en incrustation.

13. Bord de fuite (1) selon l'une quelconque des revendications précédentes, **caractérisé en ce que** lesdits chevrons (9a, 9b, 9c) ne sont répartis que sur une portion (7) de la circonférence dudit bord de fuite.

14. Nacelle pour moteur d'aéronef (3), **caractérisée en ce qu'**elle comprend au moins un bord de fuite (1) conforme à l'une quelconque des revendications précédentes.

15. Nacelle selon la revendication 14, **caractérisée en ce que** lesdits chevrons sont disposés sur le bord de fuite de la tuyère d'éjection des gaz de cette nacelle.

16. Nacelle selon l'une des revendications 14 ou 15, **caractérisée en ce que** lesdits chevrons (9a, 9b, 9c) sont disposés sur le bord de fuite de l'inverseur de poussée de cette nacelle.

## Claims

1. A trailing edge (1), such as a trailing edge of an aircraft nacelle hot gas ejection nozzle or thrust reverser, incorporating an aircraft engine noise reduction device of the type with mobile chevrons (9a, 9b, 9c) arranged in the extension of the trailing edge, comprising actuation means (13, 15, 17, 19, 21) capable of having these chevrons (9a, 9b, 9c) pass from a passive position in which they are substantially oriented along the direction of the airflow exiting said engine, to an active position in which at least one portion of each chevron is tilted relatively to this direction, this trailing edge (1) being **characterized in that** said active position is inferred from said passive position by a pivoting, optionally combined with a translation, of at least one portion of each chevron around an axis (Aa, Ab, Ac), substantially parallel to said direction.

2. The trailing edge (1) according to claim 1, **characterized in that** said active position is inferred from said passive position by global pivoting of each chevron around said axis (Aa, Ab, Ac).

3. The trailing edge (1) according to claim 1, **characterized in that** said active position is inferred from said passive position by torsional deformation of a portion of each chevron around said axis.

4. The trailing edge (1) according to claim 1, **characterized in that** each chevron comprises a fixed portion and a mobile position pivotally mounted by suitable joint means, on this fixed portion.

5. The trailing edge (1) according to any of the preceding claims, **characterized in that** each chevron has an original twisted shape.

6. The trailing edge (1) according to any of the preceding claims, **characterized in that** said actuation means (13, 15, 17, 19, 21) are capable of allowing the vibration of at least one portion of each chevron (9a, 9b, 9c) around its active position.

7. The trailing edge (1) according to any of the preceding claims, **characterized in that** said actuation means comprise elastic means (21) for returning each chevron (9a, 9b, 9c) to its passive position.

8. The trailing edge (1) according to any of the preceding claims, **characterized in that** at least one portion of each chevron (9a, 9b, 9c) is mounted on a rod (15) provided with a helical groove (17) cooperating with a fixed finger (19).

9. The trailing edge (1) according to any of the preceding claims, **characterized in that** it comprises chevrons of different sizes (9a, 9b).

10. The trailing edge (1) according to any of the preceding claims, **characterized in that** the active positions of some of said chevrons (9a, 9b) are obtained by pivoting in the opposite direction relatively to the active positions of other chevrons (9c).

11. The trailing edge (1) according to any of the preceding claims, **characterized in that** said chevrons (9a, 9b, 9c) are mounted protrusively.

12. The trailing edge (1) according to any of the preceding claims, **characterized in that** said chevrons (9a) are mounted so as to be inlaid.

13. The trailing edge (1) according to any of the preceding claims, **characterized in that** said chevrons (9a, 9b, 9c) are only distributed on a portion (7) of the circumference of said trailing edge.

14. An aircraft engine nacelle (3), **characterized in that** it comprises at least one trailing edge (1) according to any of the preceding claims.

15. The nacelle according to claim 14, **characterized in that** said chevrons are positioned on the trailing edge of the gas ejection nozzle of this nacelle.

16. The nacelle according to one of claims 14 or 15, **characterized in that** said chevrons (9a, 9b, 9c) are positioned on the trailing edge of the thrust reverser of this nacelle.

## Patentansprüche

1. Austrittskante (1) wie eine Austrittskante einer Ausstoßdüse heißer Gase oder einer Schubumkehr einer Flugzeuggondel, die eine Vorrichtung zur Geräuschreduzierung für ein Flugzeugtriebwerk vom Typ mit beweglichen Chevron-Düsen (9a, 9b, 9c) umfasst, die in der Verlängerung der Austrittskante angeordnet sind, Betätigungsmittel (13, 15, 17, 19, 21) umfassend, die imstande sind, diese Chevron-Düsen (9a, 9b, 9c) aus einer passiven Stellung, in der sie etwa in Richtung des aus dem Triebwerk austretenden Luftstroms ausgerichtet sind, in eine aktive Stellung zu verstellen, in der mindestens ein Teil jeder Chevron-Düse im Verhältnis zu dieser Richtung geneigt ist, wobei diese Austrittskante (1) **dadurch gekennzeichnet ist, dass** sich die aktive Stellung aus der passiven Stellung durch Schwenken ableitet, eventuell kombiniert mit einer Verschiebung, mindestens eines Teils jeder Chevron-Düse um eine etwa zu dieser Richtung parallele Achse (Aa, Ab, Ac).

2. Austrittskante (1) nach Anspruch 1, **dadurch gekennzeichnet, dass** die sich aktive Stellung aus der passiven Stellung durch ein Schwenken der Gesamtheit jeder Chevron-Düse um die Achse (Aa, Ab, Ac) ableitet.

3. Austrittskante (1) nach Anspruch 1, **dadurch gekennzeichnet, dass** sich die aktive Stellung aus der passiven Stellung durch die Torsionsverformung eines Teils jeder Chevron-Düse um die Achse ableitet.

4. Austrittskante (1) nach Anspruch 1, **dadurch gekennzeichnet, dass** jede Chevron-Düse einen starren Teil und eine durch geeignete Gelenkmittel auf diesem starren Teil schwenkbar montierte bewegliche Stellung umfasst.

5. Austrittskante (1) nach einem der vorangehenden Ansprüche, **dadurch gekennzeichnet, dass** jede Chevron-Düse eine spiralige Ursprungsform aufweist.

6. Austrittskante (1) nach einem der vorangehenden Ansprüche, **dadurch gekennzeichnet, dass** die Betätigungsmittel (13, 15, 17, 19, 21) imstande sind, die Vibration mindestens eines Teils jeder Chevron-Düse (9a, 9b, 9c) um ihre aktive Stellung zu erlauben.

7. Austrittskante (1) nach einem der vorangehenden Ansprüche, **dadurch gekennzeichnet, dass** die Betätigungsmittel elastische Rückholmittel (21) jeder Chevron-Düse (9a, 9b, 9c) in ihre passive Stellung umfassen.

8. Austrittskante (1) nach einem der vorangehenden Ansprüche, **dadurch gekennzeichnet, dass** mindestens ein Teil jeder Chevron-Düse (9a, 9b, 9c) auf einer Stange (15) montiert ist, die mit einer schraubenförmigen Rille (17) ausgestattet ist, die mit einem starren Finger (19) zusammenarbeitet.

9. Austrittskante (1) nach einem der vorangehenden Ansprüche, **dadurch gekennzeichnet, dass** sie verschieden große Chevron-Düse (9a, 9b) umfasst.

10. Austrittskante (1) nach einem der vorangehenden Ansprüche, **dadurch gekennzeichnet, dass** die aktiven Stellungen einiger Chevron-Düsen (9a, 9b) durch umgekehrtes Schwenken im Verhältnis zu den aktiven Stellungen anderer Chevron-Düsen (9c) hergestellt werden.

11. Austrittskante (1) nach einem der vorangehenden Ansprüche, **dadurch gekennzeichnet, dass** die Chevron-Düsen (9a, 9b, 9c) hervorstehend montiert sind.

12. Austrittskante (1) nach einem der vorangehenden Ansprüche, **dadurch gekennzeichnet, dass** die Chevron-Düsen (9a) integriert montiert sind,

13. Austrittskante (1) nach einem der vorangehenden Ansprüche, **dadurch gekennzeichnet, dass** die Chevron-Düsen (9a, 9b, 9c) nur auf einem Abschnitt (7) des Umfangs der Austrittskante verteilt sind.

14. Flugzeugtriebwerksgondel (3), **dadurch gekennzeichnet, dass** sie mindestens eine Austrittskante (1) nach einem der vorangehenden Ansprüche umfasst.

15. Gondel nach Anspruch 14, **dadurch gekennzeichnet, dass** die Chevron-Düsen auf der Austrittskante der Gasausstoßdüse dieser Gondel montiert sind.

16. Gondel nach einem der Ansprüche 14 oder 15, **dadurch gekennzeichnet, dass** die Chevron-Düsen (9a, 9b, 9c) auf der Austrittskante der Schubumkehr dieser Gondel angeordnet sind.
